# EUROPEAN PATENT APPLICATION

(11) **EP 1 547 926 A2**
(43) Date of publication of application: **29.06.2005**
(21) Application number: 04030248.1
(22) Date of filing: 21.12.2004
(51) Int. Cl.: B65B 35/50, B65B 35/38, B65G 57/04, B65G 47/08

(54) **Device for grouping and stacking tablets**

(30) Priority: 23.12.2003 IT BO20030774
(71) Applicant: 2A SRL, 40013 Casalecchio di Reno (Bologna) (IT)
(72) Inventor: Albertazzi, Corrado, 40037 Pontecchio Marconi (Bologna) (IT)
(74) Representative: Paolini, Elena

(57) **Abstract**

The device consists of a belt conveyor (1) which converges in file or on more files the tablets (2) that are stopped against an adjustable head contrast (3). Then, the central tablet (2A) is taken by a fixed central arm (5A) whereas the side ones (2B, 2C) to side arms (5B, 5C) and said taking actuated to the intake arms (5) by suction cups (6) connected with pipes (8) to intake apparatuses (9). The tablets (2) are so sucked from the belt conveyor (1) and placed in air to the distances defined to the deposit positions. Finally, the tablets (2) are placed onto a service pallet that transfers in correspondence of the tubes and, after to be positioned with a simple elevation from the bottom upward, the piles of tablets (2) are transferred inside the confection tubes.

## Description

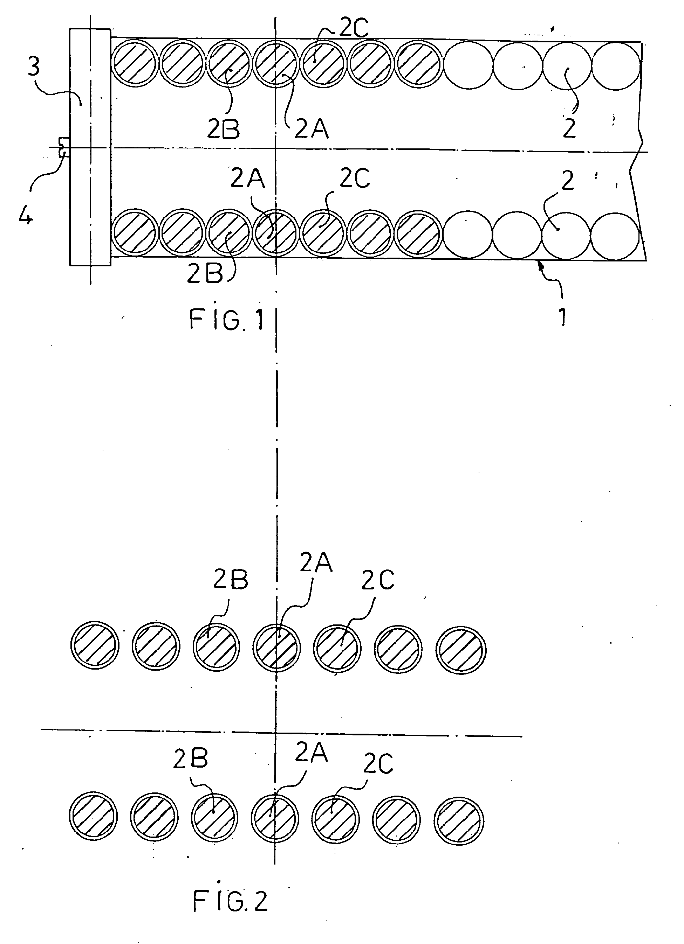

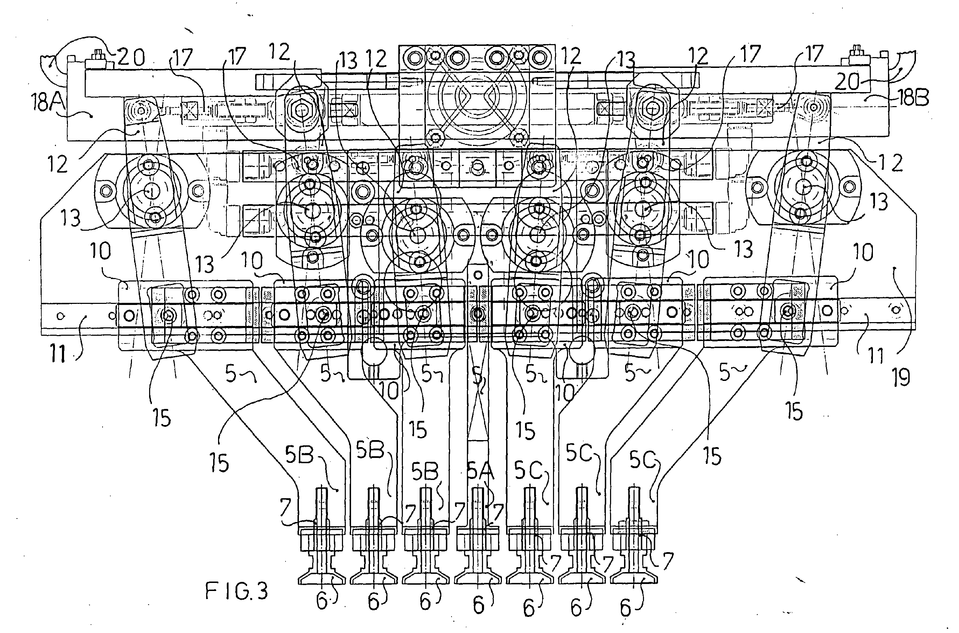

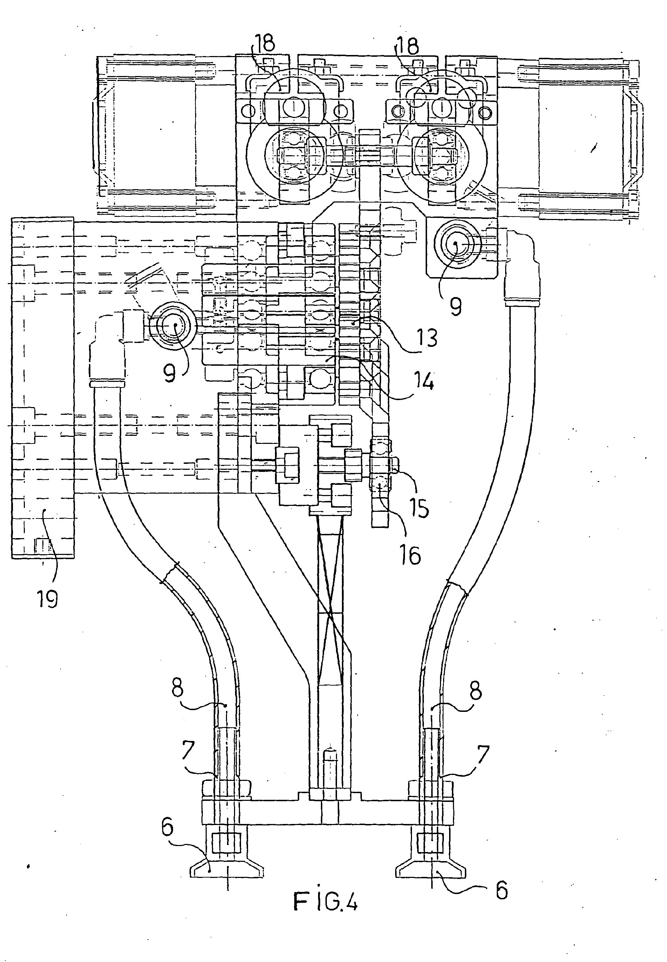

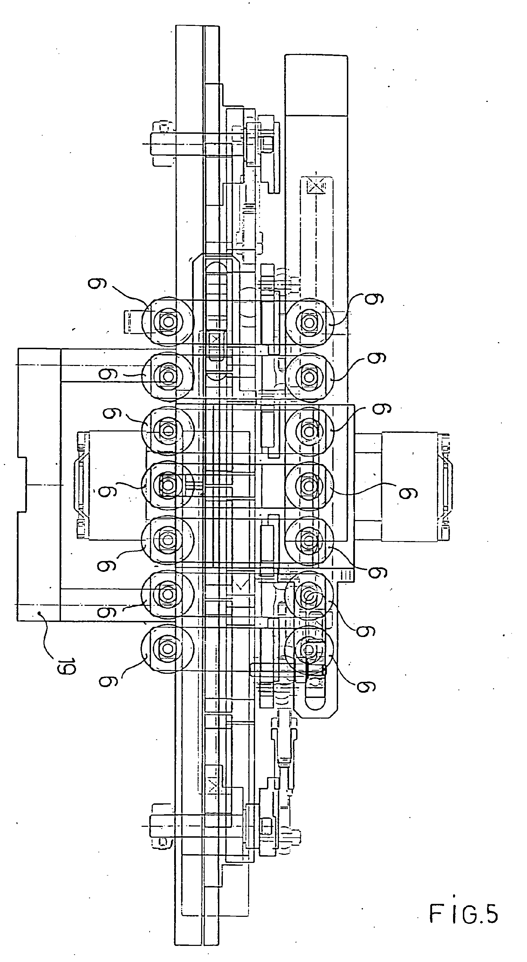

It is known that the loading devices of pellets or tablets have the working to collect the same from a position, placed onto a loading plane, and to bring them to a deposit position inside suitable containers, generally plastic tubes or other containers. Then, it is to consider that the collecting and deposit positions never coincide such as the pellets go on with mechanical systems and their disposition into containers needs a collecting to a plane and a centred deposit inside the container by means of particular devices. Currently the previous art provides the taking and the deposit of a single tablet from the collecting position to the deposit one, being very difficult the location, the taking of more tablets, the disposition and the subsequent deposit in the positions where the containers are placed. Moreover the location and the taking of pellets of diameter and different dimensions has determined the realization of specific devices able for only a particular tablet type so having the necessity to realize different devices for the different types of tablets . Besides, and not with secondary importance, the loading of the tablets one by one determines long times in the line working of the industrial production. The invented device solves the above cited problems realizing an apparatus to be used for all types of tablets to put inside the containers, apart from their dimensions, determining the contemporary loading of more tablets and their subsequent disposition very quickly inside the plastic tubes or in all the containers for tablets with considerable increase of the plant productivity. The invented device consists of a belt conveyor 1 that converges in file or on more files the tablets 2 placed one against the other in rectilinear way, with parallel files between them and with steady interaxis. Said tablets 2, in file onto the belt conveyor 1 and to this placed in movement, are stopped against an adjustable head contrast 3 perpendicularly placed to the direction of the flow of the tablets 2. The regulation of the head contrast 3, obtained with screw 4, permits the taking of the central tablet 2A that, with still file, gives the centre for the taking of more tablets, independently to the shape provided that regular and to the diameter of the same tablets. The taking of the central tablet 2A is fundamental in the taking synchronism such as the central arm 5A is fixed while the other arms 5B and 5C, placed respectively to left and to right of said arm in comparison with the frontal point of view and in equal numbers, actuate the taking onto the tablets 2B that come before the central tablet 2A and the tablets 2C that follow said tablet. The taking of the tablets is actuated to intake arms 5 by means of suction cups 6 placed at the end of said arms, i.e. the central arm 5A, the left arms 5B and the right arms 5C. The number of the intake arms 5 changes in relation to the use necessity and always it is provided a fixed central arm to set the centre for the taking of more tablets and arms with symmetrical devices in comparison with the central arm. The suction cups 6 are connected, by means of fluid seal 7, with pipes 8 connected to intake apparatuses 9 to have a depression so to determine the steady taking of the central tablet 2A and of the side tablets 2B and 2C. By the intake action and the suction cups 6, the tablets 2 are collecting to the belt conveyor 1 and in air are placed to the distances defined to the deposit positions, during the way without necessity of adjustment or of other movements. This determines obvious saving of the working time for this action and it brings to a big advantage from the point of view of the realization times in industrial scale. Differently to what previously realized that requested the insertion of a single tablet inside the tube, the invented device permits to deposit the tablets onto a service pallet in piles that are made of the wanted number, then said pallet transfers in correspondence of the containing tubes and, after to be positioned with a simple elevation from the bottom upwards, the piles of tablets are transferred inside the confection tubes. The disposition with regular distances of the tablets comes because the arms 5B and 5C are mobile and they may linearly run by means of the trolley 10 onto the rail 11. Said running of the arms 5B and 5C with the trolleys 10 onto the rail 11 is actuated by means of levers 12 rotating around pins 13 placed in flanges 14. Said levers 12 are connected to one of their end to the trolley 10 by means of pins 15 and bearings 16 whereas with the other end they are connected to tie roads 17. These tie roads 17 have the work to connect each other the levers 12 of movement of the arms from the upper end of a lever 12 with the lever which follows. So the levers 12 are connected each other and at least an end of these levers is connected to a linear electric motor 18. Said motor, realizing a horizontal translation in one way or in opposite way, puts in movement the levers 12 and consequently the arms 5B and 5C. The disposition of the tablets 2 to the wanted distance is so determined to the levers 12 of movement of the arms together with the disposition of the tie roads 17 and of the linear electric motors 18A and 18B, or other linear actuators, respectively moving the arms 5B and 5C. The connections between the system of levers 12, connected with a their end to the trolley 10, are provided with precision and to effect a displacement of a determined distance to the central tablet 2A from those near 2B and 2C, from a part to the other on the base of the distances of the deposit positions. The arms 5B and 5C during the transferring of the tablets inside the containers, by means of the described system of levers connected each other with definite connections, actuate a shifting of the tablets in such a way that the levers 12 and the arms 5A and 5B are positioned to a distance to the central tablet 2A set out for the first couple of tablets near the central tablet 2A; said distance, for the mechanisms of the invented device is double for the couple of following tablets, triple for the still following couple and so on in base of the use necessity and of the functionality of the invented device. The module of the first distance between the couple of tablets near the central tablet is so repeated with multiplicative growing factor for each couple of tablets always more distant to the central tablet. The movement of the driven levers 12, connected each other by means of the tie roads 17, infact is actuated by the linear electric motors 18A and 18B or equivalent actuators the stroke of which is programmed with automatic regulations in connection with the dimension of the worked tablet. On the base of these elements and thanks to the connections that exist between the levers it is possible to feed more files of tablets toward the containers, so as the number of tablets to load for each file depends to how many containers are fed. All the over cited components are placed inside a support structure 19 with feeder cables connected to grid. Moreover, the interaxis of the central tablet to the side tablets is always whole multiple of the first distance to the central tablet to the subsequent tablet of left or of right. So there is a distance from the centres or to any other corresponding point of the tablets that is repeated with increasing multiple factor for each couple of tablets placed with a distance always bigger to the central tablet. When the loading of the tablets inside the containers is effected, stopping the air intake flow to the suction cups 6, the tablets are placed inside the containers and, with a further opposite movement of the different, components, the device is prompt in the initial position for an other phase of loading. The use of the invented device determines an increasing of at least the 30% in comparison with the devices known in the prior art. It is to consider that for a disposition of seven tablets placed onto two files there are loadings to 1.200 tablets in a minute. In an other embodiment the system of levers 12 with tie roads 17 and the linear electric motors 18A and 18B is changed to translation screws and rotating electric motors. These worms are placed parallel to the rail 11 with a horizontal pin and a bearing to the opposite end where is placed the electric motor. Moreover are present cylindrical relieves onto the trolleys 10 engaging onto the threading of the translation screws during the rotation, in one way or in the other, with acting of the electric motors. The relief onto the trolleys 10 makes to run the same and consequently the arms 5B and 5C. Regulating the rotations so different distances are obtained adapted to the containers for the deposit of the tablets always with regular distances in comparison with the central tablet 2A. Also in this particular embodiment remains of particular importance the taking of the central tablet 2A actuated to the fixed arm and placed in position to the regulation of the head contrast 3 by screw. The invented device is illustrated in a merely indicative and not limited way in the drawings of sheets 1, 2, 3 and 4. In sheet 1 figure 1 is top view of the tablets 2 in file onto the belt conveyor 1 in reaching the head contrast 3. Figure 2 it top view of how the tablets are placed to the invented device to be then deposited in the containers. In sheet 2 figure 3 is frontal view of the invented device. In sheet 3 figure 4 is lateral view. In sheet 4 figure 5 is top view of the invented device.

## Claims

1. Device for remote placing of regular in shape tablets consists of a belt conveyor (1), **characterized in that**
- said belt conveyor (1) converges in file or on more files the tablets (2) that are stopped against an adjustable head contrast (3) and the central tablet (2A) is taken by a fixed central arm (5A) whereas the side ones (2B, 2C) to side arms (5B, 5C) and said taking actuated to the intake arms (5) by suction cups (6) connected with pipes (8) to intake apparatuses (9); and **in that**
- by means of the aspiration and of the suction cups (6) the tablets (2) are sucked from the belt conveyor (1) and placed in air to the distances defined to the deposit positions; and **in that**
- the tablets (2) are placed onto service pallet in piles, then said pallet transfers in correspondence of the tubes and, after to be positioned with a simple elevation from the bottom upward, the piles of tablets (2) are transferred inside the confection tubes.

2. Device for remote placing of regular in shape tablets, as for claim 1, **characterized in that** the regulation of the head contrast (3), obtained with screw (4), permits the taking of the central tablet (2A) that, with still file, gives the centre for the taking of more tablets.

3. Device for remote placing of regular in shape tablets, as for claim 1, **characterized in that** the number of the intake arms (5) changes in relation to the use necessity and always it is provided a fixed central arm and arms with symmetrical devices in comparison with the central arm.

4. Device for remote placing of regular in shape tablets, as for claims 1, **characterized in that** the mobile arms (5B, 5C) linearly run by means of the trolleys (10) onto the rail (11), said running is actuated by means of levers (12) rotating around pins (13) placed into flanges (14) and with said levers (12) connect on one of their ends to the trolleys (10) by means of pins (15) and bearings (16) whereas with the other end they are connected to tie roads (17).

5. Device for remote placing of regular in shape tablets, as for claim 1, **characterized in that** the levers (12) are connected each other and at least an end of these levers is connected to a linear electric motor (18) that, realizing a horizontal translation, puts in movement the levers and consequently the arms (5B, 5C).

6. Device for remote placing of regular in shape tablets, as for claim 1, **characterized in that** in an embodiment the system of levers (12) with tie roads (17) and electric motors is changed to translation screws and rotating electric motors.
